# EUROPÄISCHE PATENTANMELDUNG

(11) **EP 1 702 936 A1**
(43) Veröffentlichungstag der Anmeldung: **20.09.2006**
(21) Anmeldenummer: 05005927.8
(22) Anmeldetag: 18.03.2005
(51) Int. Cl.: C08F 14/06

(54) **Verfahren zur Herstellung von verpastbaren Polymeren**

(71) Anmelder: VESTOLIT GmbH & Co. KG, 45764 Marl (DE)
(72) Erfinder: Bankholt, Heinz, 46286 Dorsten (DE); Gehrke, Jan-Stephan, Dr., 45768 Marl (DE); Müller, Kurt, 48249 Dülmen (DE); Stieneker, Axel, Dr., 48143 Münster (DE); Träger, Michael, Dr., 45721 Haltern am See (DE)
(74) Vertreter: Sternagel, Fleischer, Godemeyer & Partner

(57) **Zusammenfassung**

Die vorliegende Erfindung betrifft ein einstufiges diskontinuierliches Verfahren zur Herstellung von verpastbaren Polymeren, insbesondere Vinylchlorid Homo- und Copolymeren nach dem Mikrosuspensionsverfahren, die in Abmischung mit Weichmachern zu PVC-Pasten, auch Plastisole genannt, mit sehr niedrigen Viskositäten und geringen Emulgatorgehalten führen.

## Beschreibung

Die vorliegende Erfindung betrifft ein einstufiges diskontinuierliches Verfahren zur Herstellung von verpastbaren Polymeren, insbesondere Vinylchlorid Homo- und Copolymeren nach dem Mikrosuspensionsverfahren, die in Abmischung mit Weichmachern zu PVC-Pasten, auch Plastisole genannt, mit sehr niedrigen Viskositäten und geringen Emulgatorgehalten führen.

Es ist bekannt, dass Vinylchlorid-Homo- und Copolymere zur Herstellung von Plastisolen nach dem kontinuierlichen und diskontinuierlichen Verfahren herstellbar sind.
Die Verarbeitbarkeit von Plastisolen wird von der Pastenviskosität entscheidend beeinflusst. Für die meisten Anwendungen (Beschichtungsverfahren wie z.B. Streichen, Drucken sowie Tauch- und Gießverarbeitung) ist eine niedrige Pastenviskosität für die Erhöhung der Produktivität von Vorteil. Weitere Vorteile niedriger Pastenviskosität sind der Verzicht oder die Reduktion von emittierenden Verarbeitungshilfsmitteln in weichmacherarmen Einstellungen.

Die nach dem kontinuierlichen Emulsionspolymerisationsverfahren hergestellten Vinylchloridpolymere führen zu Plastisolen mit niedriger Viskosität im hohen Scherbereich und mit hoher Viskosität im niedrigen Scherbereich (z. B. DE 1017369, DE 1029563, DD 145171, DE 2714948, DE 1065612, DE 2625149). Für viele der oben genannten Verarbeitungsverfahren ist jedoch eine niedrige Pastenviskosität gerade im niedrigen Scherbereich für die Produktivität und Produktqualität von Vorteil. Die nach dem kontinuierlichen Verfahren hergestellten Vinylchloridpolymere weisen zudem sehr hohe Emulgatorkonzentrationen auf, die sich bei den daraus hergestellten Produkten nachteilig auf Eigenschaften wie Wasseraufnahme, Migrationsverhalten, Transparenz bei Folien usw. auswirken.

Bei der diskontinuierlichen Emulsionspolymerisation kann mit deutlich geringerem Emulgatorgehalt polymerisiert werden. Damit wird eine Verbesserung der durch hohe Emulgatorgehalte induzierten negativen Eigenschaften wie Wasseraufnahme, Migrationsverhalten und Transparenz bei Folien erzielt (DE 1964029, BE 656985, DE 2429326). Jedoch führen die nach diesem Verfahren hergestellten Vinylchloridpolymere stets zu Produkten mit enger Verteilung der Primärteilchengrößen, aber auch zu Plastisolen mit deutlich höherer Pastenviskosität als beim kontinuierlichen Verfahren.

Bekannt ist auch die Herstellung von verpastbaren Vinylchloridpolymerisaten nach dem Mikrosuspensionsverfahren wie es zum Beispiel in DE 1069387, DD 143078, DE 3526251 beschrieben wird. Bei diesem Verfahren wird das mittels starker Scherung (Homogenisierung) vordispergierte Monomer-Wasser-Gemisch unter Verwendung von ionogenen und nichtionogenen, oberflächenaktiven Stoffen und Initiatoren zu Polymerdispersionen mit der für dieses Verfahren typischen breiten Teilchengrößenverteilung polymerisiert. Als Emulgatoren können dabei Ammonium- und Akalisalze von Fettsäuren oder Tenside wie z.B. Alkalialkylsulfonate/sulfate, Alkalialkylarylsulfonate und Sulfobernsteinsäureester in Kombination mit Fettalkoholen oder ethoxylierten Fettalkoholen verwendet werden.

Die durch dieses Verfahren erhaltenen Polymere führen zu niedrigviskosen Pasten mit relativ hohen Emulgatorgehalten. Die oft beobachtete Dilatanz der Pasten erschwert die Verarbeitung der Pasten im höheren Scherbereich.

Es ist bereits bekannt, dass durch die Erzeugung bimodaler Polymerlatices, hergestellt über Emulsions- oder Mikrosuspensionspolymerisation, eine Verbesserung der rheologischen Eigenschaften von Plastisolen erzielt werden kann (US 6245848, US 6297316, US 4245070).

Bei den genannten Verfahren ist es allerdings nötig, in einer ersten Stufe den Saatlatex P1 und in einer zweiten Stufe den Saatlatex P2 herzustellen (Teilchengröße P1□ P2). Anschließend wird in Gegenwart der beiden Teilchenpopulationen P1 und P2 durch Zugabe der entsprechenden Saatlatices und Vinylchlorid nach Polymerisation ein Latex mit bimodaler Teilchengröße erhalten. Auch ist die Verbesserung der rheologischen Eigenschaften durch das Abmischen von Polymerlatices mit unterschiedlicher Teilchengröße und anschließender Trocknung bereits beschrieben (US 6245848).

Nachteilig bei den mehrstufigen Verfahren ist der hohe technologische sowie analytische Aufwand bei der Umsetzung des Verfahrens. Die Qualität des bimodalen Latex wird entscheidend von der Qualität der Saatlatices bestimmt. Verschiebungen in der Teilchengröße und im Massenanteil einer Teilchenpopulation in den Saatlatices P 1 bzw. P2 spiegeln sich in Verschiebungen der Teilchengröße bzw. im Anteil der Teilchenpopulationen zueinander im bimodalen Latex und somit in den rheologischen Eigenschaften der Plastisole wider. Für die reproduzierbare Herstellung und Qualitätskontrolle der Saatlatices ist ein hoher Investitionsaufwand bezüglich der Dosiertechnik (Emulgator, Initiator, Monomere) und ein hoher Analytikaufwand bei der Bestimmung der Teilchengrößen der Teilchenpopulationen P 1 und P2 nötig.

Des weiteren sind Verfahren zur Herstellung von niedrigviskosem Vinylchlorid-Homo- und Copolymeren mittels Mikrosuspensionsfahrweise unter Zugabe von bis zu 1 % Paraffinen (Paraffine mit > 8 C-Atomen) bekannt (DD 220317). Nachteilig bei diesem Verfahren ist, dass die mit dem Polymer unverträglichen Paraffine, nach Trocknung des Latex (bevorzugt Sprühtrocknung) größtenteils im Polymer verbleiben und dessen Fertigteileigenschaften negativ beeinflussen (Fogging im Automobilbereich, Migration, Indoor Emission (VOC-Werte) im Fußboden- und Tapetenbereich). Zum anderen reichem sich die flüchtigen Paraffine bei der Entmonomerisierung im zurück gewonnenen Restmonomer an, und müssen anschließend aufwendig vom Monomer in der Monomerrückgewinnungsanlage destillativ getrennt werden.

Der vorliegenden Erfindung liegt die Aufgabe zugrunde, ein wirtschaftlich effizientes einstufiges Verfahren zur Herstellung von verpastbaren Polymeren und Copolymeren des Vinylchlorids durch diskontinuierliche Polymerisation in Mikrosuspensionsfahrweise zu schaffen, welches nach Trocknung und Vermischung der gewonnenen Polymere mit Weichmachern zu extrem niedrigviskosen Plastisolen mit geringen Emulgatorkonzentrationen führt.

Die Aufgabe wird erfindungsgemäß gelöst durch ein Verfahren zur Herstellung von verpastbaren Polymeren aus ethylenisch ungesättigten Monomeren mittels diskontinuierlicher Polymerisation oder Copolymerisation in einem Mikrosuspensionsverfahren unter Einsatzes einer Dispergiereinrichtung nach dem Rotor-Stator-Prinzip oder (einer) anderen Dispergiermaschine(n), worin durch ein in bezug auf Dispergierdruck und Scherspaltbreite des Dispergierwerkzeuges optimiertes einstufiges Verfahren eine bimodale Primärteilchenverteilung der Polymerdispersion erzeugt wird.

Durch die einstufige diskontinuierliche Polymerisation oder Copolymerisation in Mikrosuspensionsfahrweise unter Einsatzes einer Dispergiereinrichtung nach dem Rotor-Stator-Prinzip oder einer anderen Homogenisiermaschine (z.B. Kolbenpumpe), durch Optimierung des Homogenisierdruckes und der Scherspaltbreite des Homogenisierwerkzeuges wird direkt eine bimodale Primärteilchenverteilung der erhaltenen Polymerdispersion erzielt (Populationen der Primärteilchen: P1 im Bereich von 0.05 ― 1.0 µm; P2 im Bereich von 1.5 - 20 µm) welche nach Trocknung und Vermischung mit Weichmachern zu extrem niedrigviskosen, emulgatorarmen Plastisolen führt.

Die mit der Erfindung erzielten Vorteile bestehen insbesondere darin, dass auf eine aufwendige Herstellung von Saatlatices und deren Einsatz verzichtet werden kann sowie keine mit dem entstehenden Polymer unverträglichen Additive wie zum Beispiel Paraffine, die negative Verarbeitungseigenschaften hervorrufen, in der Polymerisation Anwendung finden. Darüber hinaus kann eine deutlich geringere Menge an Emulgator(en) zur Stabilisierung der Monomertröpfchen bzw. der Polymerdispersion eingesetzt werden, ohne dass dabei die Stabilität des gebildeten Latex leidet (Rührstabilität bei 3000 Umdrehungen/min ≥ 30 min).

Ein weiterer Vorteil des Verfahrens liegt erfindungsgemäß darin, dass nicht die gesamte Monomer- bzw. Comonomermenge durch die Homogenisiereinrichtung in den Polymerisationskessel dosiert werden muss sondern direkt "im Schuss" in den Reaktor zugegeben werden kann. Daraus resultieren kürzere Dosierzeiten und höhere Raum-Zeit-Ausbeuten.

Das der Erfindung zugrunde liegende Verfahren führt zu Polymerdispersionen mit nahezu gleichen volumenbezogenen Anteilen der verschieden großen Teilchenpopulationen in der Dispersion. Die daraus nach Trocknung der Polymeren mit Weichmachern erhaltenen Plastisole weisen eine deutlich niedrigere Pastenviskosität im Vergleich zu Plastisolen aus Mikrosuspensionsverfahren mit breiter Teilchengrößenverteilung auf. Auf den Zusatz von Additiven zur Verringerung der Pastenviskosität, wie z.B. Verdünner oder Extender, kann verzichtet werden.

Das Verfahren bietet erfindungsgemäß die Möglichkeit über die Anpassung der Parameter Druck und Scherspaltbreite in der Dispergiervorrichtung eine definierte volumenbezogene Verteilung der Teilchenpopulationen P1 und P2 einzustellen und damit rheologische Eigenschaften der Plastisole "maßzuschneidern".

Um die mit dem erfindungsgemäßen Verfahren verbundenen Vorteile optimal nutzen zu können, beträgt der mittlere volumenbezogene Teilchendurchmessser der Teilchenpopulation P1 0.05 - 1.0 µm, bevorzugt 0.2 - 0.8 µm, besonders bevorzugt 0.4 - 0.7 µm, und der mittlere volumenbezogene Teilchendurchmessser der Teilchenpopulation P2 1.0 - 20 µm, bevorzugt 2.0 - 5.0 µm, besonders bevorzugt 2.5 ― 4 µm. Der Abstand der Maxima der Teilchenpopulationen P 1 und P2 liegt bevorzugt bei 2 - 5 µm.

Das Volumenverhältnis der Teilchenpopulationen P1 und P2 bei der bimodalen Verteilung liegt in der erhaltenen Dispersion im Bereich von zwischen 90 : 10 und 10 : 90, bevorzugt im Bereich von 60 : 40 und 40 : 60.

Ein weiterer Vorteil des vorliegenden Verfahrens ist, dass die zur Stabilisierung der Polymerdispersion benötigten Emulgator/Coemulgatormengen mit jeweils :2≤ 0.8 %, deutlich unter dem für Mikrosuspensionspolymerisate üblichen Niveau von jeweils 1.0 - 1.5 % liegt. Trotz des geringen Emulgator/Coemulgatorgehaltes ist die Dispersion problemlos pumpbar und lagerstabil (Rührstabilität der Dispersion bei Rührung mit 3000 Umdrehungen/min ≥30 min.).

Die aus den Polymeren hergestellten Produkte zeichnen sich durch eine sehr geringe Wasseraufnahme aus. Im Falle von transparenten Produkten, insbesondere Folien, weisen diese auch eine besonders hohe Transparenz auf. Bei Anwendungen insbesondere im Automobilbereich ist die durch die niedrigen Emulgatorgehalte induzierte geringe Tendenz zum "Fogging" von Vorteil.

Die gemäß dem erfindungsgemäßen Verfahren hergestellte Polymerdispersion kann mit den üblichen anionischen, kationischen oder nichtionischen Emulgatoren stabilisiert werden, ohne dass es bezüglich der eingesetzten Emulgatoren eine erfindungsgemäße Beschränkung gibt.

Es können insbesondere ionogene Emulgatoren zum Einsatz kommen wie z.B. Alkalimetall- bzw. Ammonium-Salze von Carbonsäuren mit 10 bis 20 Kohlenstoffatomen, wie Natriumlaurat, Natriummyristat oder Natriumpalminat.

Weiterhin eignen sich primäre und sekundäre Alkalimetall- bzw. Ammonium-Alkylsulfate, z.B. Natrium-laurylsulfat, Natrium-myristylsulfat und Natrium-oleylsulfat.

Als Alkali- oder Ammoniumsalz von Alkylsulfonsäuren, die als Emulgatorkomponente eingesetzt werden, kommen solche in Frage, deren Alkylreste 10 bis 20 Kohlenstoffatome, vorzugsweise 14 bis 17 Kohlenstoffatome enthalten und verzweigt oder unverzweigt sind. Es kommen beispielsweise zum Einsatz: Natrium-decylsulfonat, Natrium-dodecylsulfonat, Natrium-myristylsulfonat, Natrium-palmitylsulfonat, Natrium-stearylsulfonat, Natrium-heptadecylsulfonat.

Als Alkali- und Ammoniumsalze von Alkylsulfonsäuren, die als Emulgatorkomponente verwendet werden können, lassen sich solche heranziehen, deren Alkylkette 8 bis 18 Kohlenstoffatome, vorzugsweise 10 bis 13 Kohlenstoffatome, enthält und verzweigt oder unverzweigt ist. Als Beispiele seien genannt: Natrium-tetrapropylenbenzolsulfonat, Natriumdodecylbenzolsulfonat, Natrium-octadecylbenzolsulfonat, Natrium-octylbenzolsulfonat sowie Natrium-hexadecylbenzolsulfonat.

Als Alkali- und Ammoniumsalze von Sulfobersteinsäureestern, die als Emulgatorkomponente Verwendung finden können, lassen sich solche einsetzen, deren Alkoholanteil 6 bis 14 Kohlenstoffatome, vorzugsweise 8 bis 10 Kohlenstoffatome, enthält und verzweigt oder unverzweigt ist. Es kommen beispielsweise in Frage: Natrium-dioctylsulfosuccinat, Natrium-di-2-ethylhexylsulfosuccinat, Natrium-didecylsulfosuccinat, Natrium-ditridecylsulfosuccinat.

Als nichtionische Emulgatoren können Fettalkohole mit 12 bis 20 Kohlenstoffatomen wie z.B. Cetylalkohol, Stearylalkohol oder Fettalkohol-Ethylenoxid-Propylenoxid-Additionsprodukte, oder aber Alkylphenolpolyethylenglycolether wie z.B. Nonylphenolpolyethylenglycolether verwendet werden.

Weiterhin kommen Gemische aus Emulgatoren in Betracht. Zu den genannten Emulgatoren können auch zusätzliche Hilfsstoffe beigegeben werden, z.B. Ester, wie Sorbitanmonolaurat und Carbonsäureglykolester.

Die in diesem Verfahren verwendbaren Initiatoren entsprechen den bekannten organischen und anorganischen Peroxiden. Auch die Verwendung der Initiatoren unterliegt keiner erfindungsgemäßen Beschränkung, es kann jeder geeignete Initiator eingesetzt werden.

Bevorzugt wird ein Alkylperoxydicarbonat, dessen Alkylreste 2 bis 20 C-Atome enthält z.B. Diethylperoxydicarbonat, Di-(2-Ethylhexyl)peroxydicarbonat, Dicetylperoxydicarbonat, Dimyristylperoxydicarbonat, oder ein Diacylperoxid, dessen Acylrest 4 bis 20 C-Atome enthält z.B Düsobutyrylperoxid, Dilauroylperoxid, Didecanoylperoxid, oder ein Alkyl-, Cycloalkyl-, Aryl- oder Alkylaryl-Perester z.B. Cumylperoxyneodecanoat, t-Butylperoxyneodecanoat, wobei der Peracylrest 4 bis 20 C-Atome enthält, oder ein Gemisch der genannten Peroxyverbindungen verwendet.

Als anorganische Peroxide werden bevorzugt Ammonium- und Alkaliperoxodisulfate oder Wasserstoffperoxid verwendet.

Als Comonomere können Styrol, Butadien, Acrylnitril, Acryl- und Methacrylsäureester, Ethylen sowie ein Gemisch der genannten Verbindungen zum Einsatz kommen.

Der erfindungsgemäße Einsatz eines Dispergators nach dem Rotor-Stator-Prinzip oder einer anderen Homogenisierungseinrichtung sieht insbesondere vor, dass die Prozessparameter Druck und Spaltenbreite des Dispergierwerkzeuges so aufeinander eingestellt werden, dass direkt beim Durchlaufen der Wasser/Monomer/Comonomer/Emulgator/Initiator-Mischung durch den Dispergator eine bimodale Teilchengrößenverteilung der mittels Emulgator stabilisierten Monomertröpfchen in Wasser resultiert. Durch anschließende Polymerisation erhält man eine Polymerdispersion mit bimodaler Teilchengrößenverteilung. Die Teilchengrößenverteilung der Polymerdispersion wird dabei maßgeblich von der Teilchengrößenverteilung der nach Dispergierung erhaltenen Monomertröpfchen in Wasser bestimmt.

Als besonders geeignet für das erfindungsgemäße Verfahren hat sich die Verwendung eines Dispergators nach dem Rotor-Stator-Prinzip erwiesen. Hier kann der Druck und Scherspaltenbreite des Dispergierwerkzeuges differenziert variiert werden, so dass das gewünschte Ergebnis erzielt werden kann.

Bei geeigneter Einstellung der Prozessparameter am Dispergator weist die nach Durchlauf durch das Dispergierwerkzeug erhaltene Emulsion/Dispersion eine bimodale Teilchengrößenverteilung der Monomertröpchen auf, wobei größere und kleinere Monomertröpfchen (Tröpfchen, in denen dann die Polymerisation stattfindet) stabil vorliegen. Die Einstellung der Prozessparameter am Dispergator kann ein Fachmann durch einfaches Ausprobieren und Überprüfen des hier beschriebenen Ergebnisses durchführen.

Geeignete Teilchengrößen (Durchmesser) liegen für die kleinere Population (P1) im Bereich von 0,05 bis 1,0 µm, bevorzugt ist die Hauptpopulation im Bereich von 0.2 - 0.8 mm, besonders bevorzugt 0.4 -0.7, für die größere Population (P2) liegen die Durchmesser der Teilchen im Bereich von 1,5 bis 20 µm, der größte Anteil der Population liegt bevorzugt im Bereich 2.0 -5.0 µm, besonders bevorzugt zwischen 2.5 - 4.0 µm.

Die Teilchengrößenverteilung lässt sich durch die Prozessparameter des Dispergators einstellen und richtet sich in gewissem Umfang nach der gewünschten Viskosität des aus dem Polymer herzustellenden Plastisols. Das Verhältnis von Teilchendurchmessern der Primärpartikel und Rheologie der verpastbaren Polymeren ist dem Fachmann bekannt. Die gewünschte Größe und die Populationsverhältnisse der Partikel kann gemäß den gewünschten Viskositätswerten in der Paste variiert werden.

Die bimodale Verteilung der Teilchengrößen führt zu einer Verringerung der Viskosität der erhaltenen Dispersion und somit zu einer deutlich verbesserten Verarbeitbarkeit der Polymerpasten.

Es hat sich gezeigt, dass die nach dem erfindungsgemäß beschrieben Verfahren hergestellten Polymerdispersionen mit bimodaler Teilchengrößenverteilung auch bei der weiteren Aufarbeitung, wie z. B. Ultrafiltration und Sprühtrocknung, stabil sind, so dass keine weitere Zugabe von stabilisierenden Emulgatoren erfolgen muss.

Aufgrund der niedrigen Pastenviskosität der aus den erfindungsgemäß hergestellten Polymeren bereiteten Plastisolen besteht die Möglichkeit des Verzichts der Zugabe von viskositätserniedrigenden Additiven wie z.B. Verdünner oder aber Extender. Dadurch wird die Verarbeitung der Plastisole zum Endprodukt erheblich vereinfacht und kostengünstiger.

### Abbildungen:

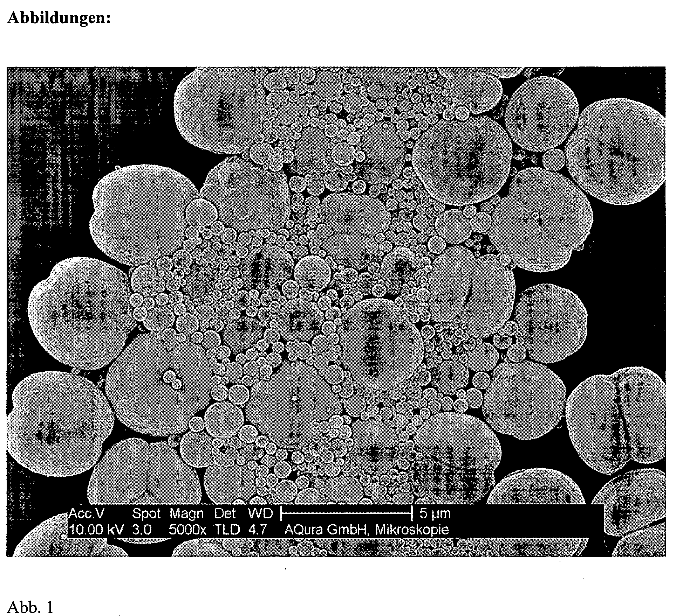

### Abb.1 : Mikroskopische Aufnahme der Polymerdispersion aus Beispiel 1

Die Abbildung 1 zeigt eine mikroskopische Aufnahme der Polymerdisperion erhalten aus der Polymerisation Beispiel 1. Die mikroskopische Aufnahme zeigt die bimodale Verteilung der Polymerdispersion mit den beiden Teilchenpopulationen P 1 und P2.

### Abb.2: Differentiale Teilchengrößenverteilung der Polymerdispersionen

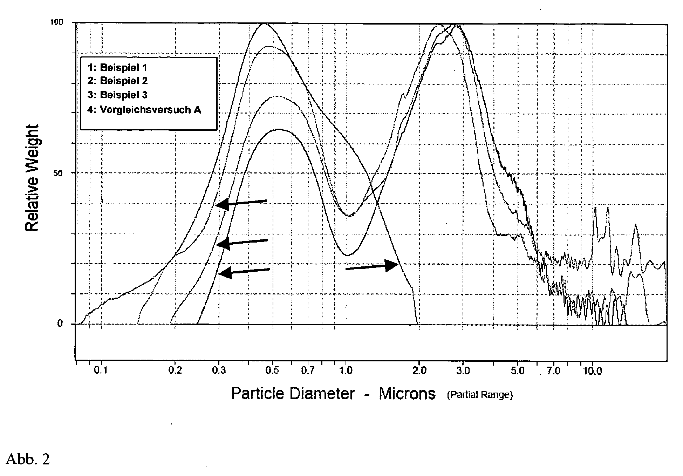

Die Abbildung 2 zeigt die gemessenen differentialen Teilchengrößenverteilungen der erhaltenen Polymerdispersionen. Die Polymerisationen wurden entsprechend der hier beschriebenen Beispiele durchgeführt.

### Beispiele:

### Beispiel 1

In einem 15 m³-Rührbehälter werden 4400 kg entmineralisiertes Wasser vorgelegt. Hierzu werden

| | |
|---|---|
| 55 | kg Alkylarylsulfonat |
| 55 | kg Stearyl-mono-ethylenglykolether |
| 5,5 | kg Dimyristyl-peroxodicarbonat |
| 5500 | kg Vinylchlorid |

gegeben. Diese Mischung wird bei 25 °C 15 min. lang gerührt und anschließend über einen Rotor-Stator-Dispergator mit 10.5 bar und einer Spaltbreite von 0.5 mm in einen 15 m³ Rührautoklaven gedrückt. Dabei beträgt die Dispergierzeit 36 min bei einem Durchsatz von 18 m³/h.

Im Autoklaven wird die Reaktionsmischung auf die Polymerisationstemperatur von 52 °C aufgeheizt. Die Polymerisationszeit beträgt ca. 8 h.

Die entmonomerisierte Dispersion wird über einen Sprühtrockner zu Polyvinylchlorid-Pulver aufgearbeitet. Die Sprühtrocknungs-Bedingungen werden so eingestellt, dass die Körnung des Pulvers < 1 Gew. % an Teilchen > 63 µm enthält.

Zur Bestimmung des rheologischen Verhaltens in einer Paste werden jeweils 100 Teile des so erhaltenen Polyvinylchlorids und 60 Teile Diethylhexylphthalat vermischt und die Pastenviskositäten nach 2 Stunden Lagerzeit bis D = 1.5 s⁻¹ und 45 s⁻¹ bestimmt (Tabelle 1).

### Beispiel 2

In einem 15 m³-Rührbehälter werden 4400 kg entmineralisiertes Wasser vorgelegt. Hierzu werden

| | |
|---|---|
| 35 | kg Alkylarylsulfonat |
| 35 | kg Stearyl-mono-ethylenglykolether |
| 5,5 | kg Dimyristyl-peroxodicarbonat |
| 5500 | kg Vinylchlorid |

gegeben. Diese Mischung wird bei 25 °C 15 min. lang gerührt und anschließend über einen Rotor-Stator-Dispergator mit 10.5 bar und einer Spaltbreite von 0.5 mm in einen 15 m³ Rührautoklaven gedrückt. Dabei beträgt die Dispergierzeit 36 min bei einem Durchsatz von 18 m³/h.

Im Autoklaven wird die Reaktionsmischung auf die Polymerisationstemperatur von 52 °C aufgeheizt. Die Polymerisationszeit beträgt ca. 8 h.

Die Aufarbeitung der Dispersion erfolgt wie in Beispiel 1. Die Pastenviskosität des Pulvers ist Tabelle 1 zu entnehmen.

### Beispiel 3

In einem 15 m³-Rührbehälter werden 4400 kg entmineralisiertes Wasser vorgelegt. Hierzu werden

| | |
|---|---|
| 35 | kg Alkylarylsulfonat |
| 35 | kg Stearyl-mono-ethylenglykolether |
| 5,5 | kg Dimyristyl-peroxodicarbonat |
| 3.000 | kg Vinylchlorid |

gegeben. Diese Mischung wird bei 25 °C 15 min. lang gerührt und anschließend über einen Rotor-Stator-Homogenisierer mit 10.5 bar und einer Spaltbreite von 0.5 mm in einen 15 m³ Rührautoklaven gedrückt. Dabei beträgt die Dispergierzeit 30 min bei einem Durchsatz von 18 m³/h. 2500 kg Vinylchlorid werden vor Aufheizen der Reaktionsmischung in den Rührautoklaven dosiert.

Im Autoklaven wird die Reaktionsmischung auf die Polymerisationstemperatur von 52 °C aufgeheizt. Die Polymerisationszeit beträgt ca. 8 h.

Die Aufarbeitung der Dispersion erfolgt wie in Beispiel 1. Die Pastenviskosität des Pulvers ist Tabelle 1 zu entnehmen.

### Vergleichsversuch A

In einem 15 m³-Rührbehälter werden 4400 kg entmineralisiertes Wasser vorgelegt. Hierzu werden

| | |
|---|---|
| 55 | kg Alkylarylsulfonat |
| 55 | kg Stearyl-mono-ethylenglykolether |
| 5.5 | kg Dimyristyl-peroxodicarbonat |
| 5500 | kg Vinylchlorid |

gegeben. Diese Mischung wird bei 25 °C 15 min. lang gerührt und anschließend über einen Kolbenhomogenisator mit einem Homogenisierdruck von ca. 170 bar und einem Durchsatz von 6 m ³/h in einen 15 m³ Rührautoklaven gedrückt. Dabei beträgt die Dispergierzeit 100 min.

Im Autoklaven wird die Reaktionsmischung auf die Polymerisationstemperatur von 52 °C aufgeheizt. Die Polymerisationszeit beträgt ca. 8 h.

Die Aufarbeitung der Dispersion erfolgt wie in Beispiel 1. Die Pastenviskosität des Pulvers ist Tabelle 1 zu entnehmen.

### Vergleichsversuch B

In einem 15 m³-Rührbehälter werden 4400 kg entmineralisiertes Wasser vorgelegt. Hierzu werden

| | |
|---|---|
| 35 | kg Alkylarylsulfonat |
| 35 | kg Stearyl-mono-ethylenglykolether |
| 5.5 | kg Dimyristyl-peroxodicarbonat |
| 5500 | kg Vinylchlorid |

gegeben. Diese Mischung wird bei 25 °C 15 min. lang gerührt und anschließend über einen Kolbenhomogenisator mit einem Homogenisierdruck von ca. 170 bar und einem Durchsatz von 6 m³/h in einen 15 m³ Rührautoklaven gedrückt. Dabei beträgt die Dispergierzeit 100 min.

Im Autoklaven wird die Reaktionsmischung auf die Polymerisationstemperatur von 52 °C aufgeheizt. Die Polymerisationszeit beträgt ca. 8 h.

Es fällt eine große Menge Koagulat an, so dass eine Aufarbeitung der Dispersion über Sprühtrocknung nicht zu realisieren ist.

### Vergleichsversuch C

In einem 15 m³-Rührbehälter werden 4400 kg entmineralisiertes Wasser vorgelegt. Hierzu werden

| | |
|---|---|
| 35 | kg Alkylarylsulfonat |
| 35 | kg Stearyl-mono-ethylenglykolether |
| 5.5 | kg Dimyristyl-peroxodicarbonat |
| 3000 | kg Vinylchlorid |

gegeben. Diese Mischung wird bei 25 °C 15 min. lang gerührt und anschließend über einen Kolbenhomogenisator mit einem Homogenisierdruck von ca. 170 bar und einem Durchsatz von 6m³/h in einen 15 m³ Rührautoklaven gedrückt. 2500 kg Vinylchlorid werden vor Aufheizen der Reaktionsmischung in den Rührautoklaven dosiert. Dabei beträgt die Dispergierzeit 85 min.

Im Autoklaven wird die Reaktionsmischung auf die Polymerisationstemperatur von 52 °C aufgeheizt. Die Polymerisationszeit beträgt ca. 8 h.

Es fällt eine große Menge Koagulat an, so dass eine Aufarbeitung der Dispersion über Sprühtrocknung nicht zu realisieren ist.

**Tabelle 1 Pastenviskositäten PVC/DEHP = 100/60 und mittlere volumenbezogene Teilchengrößen Mᵥ (P1) und (P2) (siehe auch Abb.2)**

| **Beispiel/Vergleichsversuch** | **Pa· s** | | **M**_{**v**} **(P1)** | **M**_{**v**} **(P2)** |
|---|---|---|---|---|
| | **D = 1.5 s**^{**-1**} | **D = 45 s**^{**-1**} | **[µm]** | **[µm]** |
| 1 | 1,8 | 2,2 | 0.48 | 2.3 |
| 2 | 1,9 | 2,4 | 0.5 | 2.7 |
| 3 | 2,0 | 2,2 | 0.52 | 2.8 |
| A | 3,0 | 3,2 | 0.50 | - |
| B | - | - | - | - |
| C | - | - | - | - |

## Patentansprüche

1. Verfahren zur Herstellung von verpastbaren Polymeren aus ethylenisch ungesättigten Monomeren mittels diskontinuierlicher Polymerisation oder Copolymerisation in einem Mikrosuspensionsverfahren unter Einsatzes einer Dispergiereinrichtung nach dem Rotor-Stator-Prinzip oder (einer) anderen Homogenisiermaschine(n), worin durch ein in bezug auf Dispergierdruck und Scherspaltbreite des Dispergierwerkzeuges optimiertes einstufiges Verfahren eine bimodale Primärteilchenverteilung der Polymerdispersion erzeugt wird.

2. Verfahren gemäß Anspruch 1, wobei das verpastbare Polymer ein Polymeres des Vinylchlorids oder von Mischungen des Vinylchlorids mit bis zu 30 Gewichtsprozent copolymerisierbaren Monomeren ist.

3. Verfahren gemäß Anspruch 1 und 2, **dadurch gekennzeichnet, dass** die Durchmesser der Primärpartikel für die Population P 1 im Bereich von 0.05 - 1.0 µm und für die Population P2 im Bereich von 1.5 - 20 µm ist.

4. Verfahren gemäß einem der Ansprüche 1 bis 3, **dadurch gekennzeichnet, dass** das Volumenverhältnis der Teilchenpopulationen P1 und P2 der bimodalen Verteilung zwischen 90 : 10 und 10 : 90, bevorzugt im Bereich von 60 : 40 und 40 : 60 liegt.

5. Verfahren gemäß einem der Ansprüche 1 bis 4, **dadurch gekennzeichnet, dass** die zur Stabilisierung der Polymerdispersion eingesetzten ionischen Emulgator/Coemulgatormengen jeweils zwischen 0.3 - 2.0 Gew.% liegen.

6. Verfahren gemäß einem der Ansprüche 1 bis 5, **dadurch gekennzeichnet, dass** emulgator/coemulgatorarme Mischungen mit Emulgator/Coemulgatormengen von jeweils bevorzugt zwischen 0.4 - 0.8 Gew.% polymerisiert werden.

7. Verfahren gemäß einem der Ansprüche 1 bis 6, **dadurch gekennzeichnet, dass** nur 30 - 80 % der Monomermenge über die Dispergiereinrichtung in den Polymerisationsreaktor überführt und der verbleibende Anteil direkt in den Polymerisationskessel dosiert wird.

8. Verpastbares Polymerisat, hergestellt nach dem Verfahren gemäß einem der Ansprüche 1 bis 7.

9. Produkt, hergestellt aus einem Polymerisat gemäß Anspruch 8.

10. Verwendung eines Dispergators nach dem Rotor-Stator-Prinzip zur Herstellung von verpastbaren Polymeren und Polymerdispersionen.
